# EUROPÄISCHE PATENTSCHRIFT

(11) **EP 2 665 227 B1**
(45) Veröffentlichungstag und Bekanntmachung des Hinweises auf die Patenterteilung: **24.09.2014**
(21) Anmeldenummer: 12003938.3
(22) Anmeldetag: 18.05.2012
(51) Int. Cl.: H04L 12/46, H04L 12/40

(54) **Flexray-Gateway und Verfahren zum Betreiben eines Flexray-Gateways**
Flexray-gateway and method for operating same
Passerelle Flexray et procédé de fonctionnement d'une passerelle Flexray

(43) Veröffentlichungstag der Anmeldung: 20.11.2013
(73) Patentinhaber: Vector Informatik GmbH, 70499 Stuttgart (DE)
(72) Erfinder: Gossner, Martin, 70499 Stuttgart (DE); Augustin, Olav, 70499 Stuttgart (DE); Braun, Jochen, 70499 Stuttgart (DE); Fischer, Markus, 70499 Stuttgart (DE)
(74) Vertreter: Bregenzer, Michael

(56) Entgegenhaltungen:
- EP-A1- 1 998 498
- DE-A1-102005 048 585
- DE-A1-102007 047 248

## Beschreibung

Die Erfindung betrifft einen Flexray-Gateway mit einer ersten Bus-Schnittstelle zum Anschluss eines ersten Flexray-Busses und einer zweiten Bus-Schnittstelle zum Anschluss eines zweiten Flexray-Busses, wobei der Flexray-Gateway Koppelmittel zum Koppeln eines ersten Flexray-Busses mit einem zweiten Flexray-Bus und zur Übertragung von Busnachrichten zwischen dem ersten und dem zweiten Flexray-Bus aufweist, wobei der Flexray-Gateway einen Flexray-Controller mit einer ersten Kanal-Schnittstelle zum Senden und Empfangen von Busnachrichten eines ersten Kanaltyps eines Flexray-Busses und einer zweiten Kanal-Schnittstelle zum Senden und Empfangen von Busnachrichten eines zweiten Kanaltyps eines Flexray-Busses aufweist. Die Erfindung betrifft ferner ein Verfahren zum Betreiben eines derartigen Flexray-Gateways.

Ein derartiger Flexray-Gateway ist z.B. in EP 1 998 498 A1 erläutert. In DE 10 2007 047 248 A1 ist ein an zwei Kanäle eines Flexray-Busses angeschlossener Flexray-Controller erläutert. DE 10 2005 048 585 A1 beschreibt einen Teilnehmer eines Kommunikationssystems mit einem Mikroprozessor sowie mindestens zwei Kommunikationskontrollern, der eine Gateway-Funktionalität realisiert.

Ein so genannter Flexray-Bus hat einen A-Kanal und einen B-Kanal, die physikalisch voneinander getrennt sind. Zur Übertragung von Daten auf einem Flexray-Bus hat ein hierfür geeigneter Flexray-Controller, der auch als Communication Controller bzw. Kommunikationskontroller bezeichnet wird, zwei Kanal-Schnittstellen, mit denen er Daten auf dem ersten Kanal und auf dem zweiten Kanal, also beispielsweise dem A-Kanal und dem B-Kanal, senden und empfangen kann. Zur unmittelbaren Anbindung des Flexray-Controllers an einen Flexray-Bus ist noch ein so genannter Bus-Transceiver erforderlich, der sozusagen die physikalische Ebene bzw. die physikalische Schicht bedient.

Die Busnachrichten, sogenannte Frames, können zwar prinzipiell auf einem A-Kanal und einem B-Kanal gleich aufgebaut sein, haben jedoch unterschiedliche Prüfsummen. Daher kann einen A-Kanal des einen Flexray-Busses nicht mit einem B-Kanal eines anderen Flexray-Busses direkt kommunizieren. Mithin kann also auch ein Flexray-Controller nicht mit zwei A-Kanälen unterschiedlicher Flexray-Busse kommunizieren. Wenn also zwei Flexray-Busse miteinander mittels eines Gateways verknüpft werden sollen, beispielsweise um eine so genannte Restbus-Simulation für einen Flexray-Bus bereitzustellen, sind mindestens zwei Flexray-Controller nötig.

Es ist daher die Aufgabe der vorliegenden Erfindung, einen möglichst einfach aufgebauten Flexray-Gateway sowie ein zum Betrieb eines möglichst einfach aufgebauten Flexray-Gateways geeignetes Verfahren bereitzustellen.

Zur Lösung der Aufgabe ist bei einem Flexray-Gateway der eingangs genannten Art vorgesehen, dass die Koppelmittel zum Koppeln eines zum Übertragen von Busnachrichten des ersten Kanaltyps vorgesehenen Kanal-Anschlusses der ersten Bus-Schnittstelle mit einem ebenfalls zum Übertragen von Busnachrichten des ersten Kanaltyps vorgesehenen Kanal-Anschluss der zweiten Bus-Schnittstelle ausgestaltet sind, und dass die Koppelmittel mindestens ein Anpassungsmodul zum Anpassen von an der zweiten Bus-Schnittstelle empfangenen Busnachrichten des ersten Kanaltyps in Busnachrichten des zweiten Kanaltyps und zur Weiterleitung an die zweite Kanal-Schnittstelle des Flexray-Controllers und/oder zum Anpassen von über die zweite Kanal-Schnittstelle des Flexray-Controllers gesendeten Busnachrichten des zweiten Kanaltyps in Busnachrichten des ersten Kanaltyps und zur Weiterleitung an die zweite Bus-Schnittstelle aufweisen.

Das erfindungsgemäße Verfahren zum Betreiben eines Flexray-Gateways mit einer ersten Bus-Schnittstelle zum Anschluss eines ersten Flexray-Busses und einer zweiten Bus-Schnittstelle zum Anschluss eines zweiten Flexray-Busses, umfasst die Schritte:
- Koppeln eines zum Übertragen von Busnachrichten des ersten Kanaltyps vorgesehenen Kanal-Anschlusses der ersten Bus-Schnittstelle mit einem ebenfalls zum Übertragen von Busnachrichten des ersten Kanaltyps vorgesehenen Kanal-Anschluss der zweiten Bus-Schnittstelle und Übertragen von Busnachrichten zwischen den Kanal-Anschlüssen,
- Senden und Empfangen von Busnachrichten eines ersten Kanaltyps eines Flexray-Busses an einer ersten Kanal-Schnittstelle eines Flexray-Controllers und/oder Senden und Empfangen von Busnachrichten eines zweiten Kanaltyps eines Flexray-Busses an einer zweiten Kanal-Schnittstelle des Flexray-Controllers,
- und Anpassen von an der zweiten Bus-Schnittstelle empfangenen Busnachrichten des ersten Kanaltyps in Busnachrichten des zweiten Kanaltyps und Weiterleitung an die zweite Kanal-Schnittstelle des Flexray-Controllers
- und/oder Anpassen von über die zweite Kanal-Schnittstelle des Flexray-Controllers gesendeten Busnachrichten des zweiten Kanaltyps in Busnachrichten des ersten Kanaltyps und Weiterleitung an die zweite Bus-Schnittstelle anhand von mindestens eines Anpassungsmoduls.

Es ist ein Grundgedanke der vorliegenden Erfindung, dass mithilfe eines einzigen Flexray-Controllers bzw. Communication Controllers, ein Gateway zur Verbindung zweier Flexray-Busse bereitgestellt werden kann. Somit ist es mit geringem Aufwand möglich, beispielsweise an einen vorhandenen Flexray-Bus, der zum Beispiel in einem Kraftfahrzeug bereits aufgebaut ist, einen neuen Bus-Zweig, auch als Bus-Cluster bezeichnet, anzubinden und die Funktionsfähigkeit zu prüfen. Das erfindungsgemäße Vorgehen ermöglicht es dabei, mit einem einzigen Flexray-Controller zu arbeiten, dessen Fähigkeiten sozusagen optimal auszunützen und dennoch zwei gleichartige bzw. Kanäle gleichen Kanaltyps unterschiedlicher Flexray-Busse mithilfe des einzigen im Gateway vorhandenen oder notwendigen Flexray-Controllers zu koppeln.

Die allgemeine Formulierung erster Kanaltyp und zweiter Kanaltyp wurde gewählt, weil es sich bei dem ersten und dem zweiten Kanaltyp jeweils um einen A-Kanal, aber auch um einen B-Kanal handeln kann. Darauf kommt es nicht an.

Selbstverständlich kann ein erfindungsgemäßes Gateway auch mehrere Flexray-Controller umfassen, beispielsweise wenn ein erster Controller dafür vorgesehen ist, zwei A-Kanäle zweier Flexray-Busse zu koppeln und ein zweiter Flexray-Controller dazu dient, zwei B-Kanäle zweier Flexray-Busse zu koppeln. Der Flexray-Controller ist beispielsweise ein Bestandteil eines FPGAs oder eines sonstigen programmierbaren Schaltkreisbausteins.

Auch hier erweist es sich als vorteilhaft, dass nicht mehrere Flexray-Controller, zum Beispiel zwei Flexray-Controller, bei einem Gateway notwendig sind, um Kanäle gleichen Kanaltyps zweier Flexray-Busse zu koppeln. Es ist offensichtlich, dass ein Flexray-Controller im programmierbaren Schaltkreisbaustein weniger Platz bzw. Kapazität benötigt als zwei Flexray-Controller.

Die Verwendung eines einzigen Flexray-Controllers hat auch den Vorteil, dass ein geprüfter, zertifizierter Baustein - in Hardware oder in Software - bei dem erfindungsgemäßen Gateway verwendet wird, so dass ein normgerechtes Verhalten des Gateways an den angebundenen Flexray-Bussen gewährleistet ist.

An dieser Stelle sei bemerkt, dass der erfindungsgemäße Flexray-Gateway in Hardware und in Software oder beidem realisiert sein kann. Besonders bevorzugt ist eine Realisierung in einem programmierbaren Schaltkreisbaustein, der sehr effizient ausgenützt werden kann. Dadurch ist das Gateway reaktionsschnell und einfach im Aufbau.

Der erfindungsgemäße Flexray-Gateway eignet sich bevorzugt zu Simulationszwecken, Prüfzwecken oder auch nur zur Verknüpfung zweier Flexray-Busse (oder jede Kombination der vorgenannten Maßnahmen).

Eine besonders bevorzugtes Anwendungsgebiet ist auch das Stören von Busnachrichten für beispielsweise einen Busknoten, insbesondere ein Steuergerät, oder auch für ein Segment des FlexRay-Clusters. So kann beispielsweise eine Busnachricht modifiziert werden, indem beispielsweise Inhalte der Busnachricht ausgetauscht werden. Auf diesem Wege wird beispielsweise der empfangende Busknoten, z.B. Ein Steuergerät, mit geänderten Informationen konfrontiert, um zu prüfen, wie der Busknoten darauf reagiert. Somit kann also beispielsweise ein Steuergerät, das an dem Flexray-Bus betrieben wird, getestet werden.

Auch die Einbindung eines neuen Steuergerätes zu Testzwecken in einen vorhandenen Flexray-Bus ist mit dem erfindungsgemäßen Gateway einfach realisierbar. So ist es beispielsweise möglich, dass das Flexray-Gateway von dem neuen Steuergerät stammende Busnachrichten so modifiziert, dass sie von den übrigen Steuergeräten des vorhandenen, durch das Flexray-Gateway angekoppelten Busses verstanden werden. Beispielsweise setzt das erfindungsgemäße Flexray-Gateway Daten aus einem Frame, der vom neuen Steuergerät empfangen wird, in einen anderen Frame um, den das Flexray-Gateway auf dem "alten" Flexray-Bus an die an diesen Flexray-Bus angeschlossenen übrigen Steuergeräte versendet. Das erfindungsgemäße Flexray-Gateway ist also vorzugsweise zu einem Umsetzen von Daten aus einer Busnachricht oder Frame in eine andere Busnachricht oder einen anderen Frame ausgestaltet.

Das erfindungsgemäße Flexray-Gateway ist äußerst flexibel und ermöglicht es, nicht nur einige wenige Frames zu stören oder zu modifizieren, zum Beispiel nur vier oder fünf Frames, sondern kann eine Vielzahl von Frames oder Busnachrichten entsprechend verändern. Das Flexray-Gatway ist also sehr flexibel und erweitert beispielsweise die Prüfmöglichkeiten gegenüber vorhandenen Technologien deutlich.

Der Flexray-Controller ist zweckmäßigerweise zum Erzeugen von Simulationsbusnachrichten für den Versand an der ersten oder zweiten Busschnittstelle anhand von an einer Einspeiseschnittstelle des Flexray-Gateways bereitgestellten Daten ausgestaltet. Die Einspeiseschnittstelle kann beispielsweise einen Bestandteil des Flexray-Controllers bilden. Die Einspeiseschnittstelle, die beispielsweise einen Zwischenpuffer und/oder eine Datenschnittstelle oder dergleichen umfasst, kann vom Flexray-Controller ausgelesen werden, um die Simulationsbusnachricht zu erzeugen. An dieser Stelle sei bemerkt, dass eine Simulationsbusnachricht eine Störnachricht sein kann, aber auch jede andere Nachricht, beispielsweise eine Busnachricht, die eine auf dem eine Flexray-Bus empfangene Information enthält, die dann aufbereitet wird und vom Flexray-Controller zum Versand auf dem anderen Flexray-Bus bereitgestellt wird. So kann beispielsweise auch eine Information aus einem vom ersten Flexray-Bus empfangenen Frame in eine andere Busnachricht sozusagen umgepackt werden und als Simulationsbusnachricht am andern Flexray-Bus auf diesem Wege versendet werden. Der Flexray-Controller bereitet die Daten zu einer Busnachricht auf oder bereitet eine Busnachricht für den zweiten Flexray-Bus vor, so dass sich das Gateway am zweiten, anderen Flexray-Bus normgerecht verhält.

Der Flexray-Controller ist zweckmäßigerweise zum Ausgeben der Simulationsbusnachricht an seiner zweiten Kanal-Schnittstelle als eine Busnachricht des zweiten Kanaltyps ausgestaltet und das mindestens eine Anpassungsmodul seinerseits wiederum zum Anpassen dieser Simulationsbusnachricht in eine Busnachricht des ersten Kanaltyps. Der Flexray-Controller gibt also beispielsweise eine für einen B-Kanal geeignete Busnachricht aus, die dann vom Anpassungsmodul auf eine für einen A-Kanal geeignete Busnachricht umgewandelt wird. Beispielsweise tauscht das Anpassungsmodul die Prüfsumme der Busnachricht aus.

Das erfindungsgemäße Gateway kann Busnachrichten, die auf dem ersten Flexray-Bus empfangen werden, quasi transparent über die Kopplungsmittel hinweg als Busnachricht auf dem zweiten Flexray-Bus ausgeben. Dadurch arbeitet das Gateway sehr effizient und schnell. Selbstverständlich ist auch der umgekehrte Weg ohne weiteres möglich, d.h. dass das Gateway auf dem zweiten Flexray-Bus empfangene Busnachrichten oder Frames direkt an die Busschnittstelle für den ersten Flexray-Bus weiterleiten kann. Dabei spielt der Flexray-Controller keine Rolle bzw. bleibt zweckmäßigerweise passiv. Dies dient unter anderem einer sehr schnellen Nachrichtenvermittlung. Dieser Betrieb kann auch als ein Bypass-Betrieb bezeichnet werden.

Zum Einspeisen von Busnachrichten in den ersten oder zweiten Flexray-Bus kann jedoch der Flexray-Controller effizient eingesetzt werden. Er kann beispielsweise an einer Einspeiseschnittstelle bereitgestellte Daten zu Busnachrichten verarbeiten, die dann nach Anpassung durch das Anpassungsmodul von dem Gateway an seiner ersten oder zweiten Bus-Schnittstelle ausgegeben werden. Dieser Betriebsmodus kann auch als Simulationsbetrieb bezeichnet werden.

Ein Umschalten zwischen dem Simulationsbetrieb und dem Bypass-Betrieb wird durch die folgende Maßnahme erleichtert: Das Flexray-Gateway gemäß der Erfindung weist vorzugsweise mindestens ein Schaltmodul zum Umschalten zwischen einer Bypass-Funktion, in der die Koppelmittel eine von dem ersten Flexray-Bus empfangene Busnachricht an der zweiten Bus-Schnittstelle und/oder eine von dem zweiten Flexray-Bus empfangene Busnachricht an der ersten Bus-Schnittstelle unverändert ausgeben, und einer Simulationsfunktion auf, in der die Koppelmittel eine von dem Flexray-Controller bereitgestellte Simulationsbusnachricht, insbesondere anstelle einer an einer der Bus-Schnittstellen des Flexray-Gateways empfangenen Busnachricht, an der ersten oder zweiten Bus-Schnittstelle ausgeben. Somit kann also eine Busnachricht vom einen Flexray-Bus zum anderen Flexray-Bus weitergegeben werden oder beispielsweise auch durch eine andere Busnachricht oder einen anderen Frame ersetzt werden.

Für einen möglichst reibungslosen und schnellen Betrieb ist es vorteilhaft, wenn das mindestens eine Schaltmodul zwischen dem mindestens einen Anpassungsmodul und der zweiten Bus-Schnittstelle angeordnet ist. Somit kann also eine beispielsweise vom Flexray-Controller bereitgestellte Simulationsnachricht das Anpassungsmodul durchlaufen, dort also beispielsweise in eine Simulationsnachricht des ersten Kanaltyps umgewandelt werden (zum Beispiel in eine A-Kanal-Busnachricht) und dann direkt vom mindestens einen Schaltmodul an die zweite Bus-Schnittstelle weitergeleitet werden.

Die Einspeiseschnittstelle umfasst zweckmäßigerweise einen Pufferspeicher, in dem Daten für Simulationsbusnachrichten bereitstellbar sind. Beispielsweise können in dem Pufferspeicher Daten für eine oder mehrere Simulationsbusnachrichten bereitgestellt werden. Somit können Daten beispielsweise für eine gesamte Sequenz oder zumindest Teile einer Sequenz von Frames in dem Pufferspeicher bereitgestellt werden. Eine vorteilhafte Ausgestaltung der Erfindung sieht nunmehr vor, dass den Daten für eine jeweilige Simulationsbusnachricht eine Steuerinformation zugeordnet ist, die von einem Schaltmittel, zum Beispiel dem Schaltmodul oder einem das Schaltmodul ansteuernden Steuermodul, ausgelesen wird, um das mindestens eine Schaltmodul zwischen der Bypass-Funktion, in der das Schaltmodul eine Weiterleitung der Simulationsbusnachricht blockiert, und einer Simulationsfunktion ansteuert, in der das mindestens eine Schaltmodul eine anhand der Daten in dem Pufferspeicher erzeugte Simulationsnachricht weiterleitet. In der Bypass-Funktion leitet das Schaltmodul beispielsweise eine vom einen Flexray-Bus stammende Busnachricht zum andern Flexray-Bus weiter. In der Simulationsfunktion hingegen wird eine derartige Busnachricht beispielsweise blockiert und statt dieser Busnachricht die Simulationsnachricht an die Bus-Schnittstelle des Gateways gesendet.

Vorzugsweise hat der Flexray-Controller eine Monitoring-Schnittstelle oder eine Überwachungsschnittstelle, um zwischen der ersten und der zweiten Busschnittstelle übertragenen Busnachrichten auszugeben. Selbstverständlich kann die Monitoring-Schnittstelle unidirektional oder bidirektional sein, d.h. dass sie beispielsweise nur die von der ersten zur zweiten Busschnittstelle übertragenen Nachrichten oder nur die umgekehrte Richtung ausgibt oder beide Übertragungsrichtungen. An die Monitoring-Schnittstelle kann beispielsweise ein Simulationsmodul oder Testwerkzeug angeschlossen werden, zum Beispiel ein Personal Computer oder ein sonstiges Gerät mit einer Ausgabeschnittstelle, zum Beispiel einem Display, einem Lautsprecher oder dergleichen.

In diesem Zusammenhang sei auch erwähnt, dass an die vorgenannte Einspeiseschnittstelle ein derartiges Testwerkzeug angeschlossen werden kann.

Durch die Kopplung zweier gleichartiger Kanäle über das erfindungsgemäße Gateway hinweg könnte es zu Rückkopplungeffekten kommen. Dagegen wird folgendes vorgeschlagen: die Koppelmittel leiten vorteilhaft an der ersten Bus-Schnittstelle empfangene Busnachrichten an die zweite Bus-Schnittstelle weiter, blockieren jedoch zur Vermeidung einer Rückkopplung eine Weiterleitung von an der zweiten Bus-Schnittstelle empfangenen Busnachrichten an die erste Bus-Schnittstelle. Das geht natürlich auch umgekehrt, d.h. dass die Koppelmittel an der zweiten Bus-Schnittstelle empfangene Busnachrichten an die erste Bus-Schnittstelle weiterleiten und zur Vermeidung einer Rückkopplung eine Weiterleitung von an der ersten Bus-Schnittstelle empfangenen Busnachrichten an die zweite Bus-Schnittstelle blockieren.

Wie schon erwähnt, kann der erste Kanaltyp einem A-Kanal eines Flexray-Busses entsprechen oder alternativ auch einem B-Kanal. Das Anpassungsmodul ist vorzugsweise dazu vorgesehen, eine Prüfinformation der anzupassenden Busnachrichten zu modifizieren, beispielsweise eine Prüfsumme. Selbstverständlich kann auch eine andere Anpassung erfolgen, wenn dies erforderlich ist.

Der Flexray-Controller ist zweckmäßigerweise zur Zeit-Synchronisierung der ersten Bus-Schnittstelle mit der zweiten Bus-Schnittstelle ausgestaltet. Der Flexray-Controller erfüllt also sozusagen die Synchronisierungsaufgaben und ermöglicht es, dass sowohl der erste Flexray-Bus als auch der zweite Flexray-Bus synchron arbeiten. Beispielsweise sorgt der Flexray-Controller für einen synchronen Hochlauf der beiden Flexray-Busse bzw. synchronisiert sich mit den hochlaufenden oder anlaufenden Flexray-Bussen. Es ist bevorzugt vorgesehen, dass der Flexray-Controller die vom ersten Flexray-Bus vorgegebenen Zeitinformationen, zum Beispiel den Bustakt, zur Synchronisierung bzw. zum Hochlauf des zweiten Flexray-Busses übernimmt bzw. den zweiten Flexray-Bus mit diesen so genannten Cluster-Informationen und dem Timing des ersten Flexray-Busses startet. Das Flexray-Gateway sendet beispielsweise vom einen Flexray-Bus empfangene Synchronisationsbotschaften (z.B. sogenannte Sync-Frames) zum anderen Flexray-Bus oder generiert anhand der empfangenen Synchronisationsbotschaften neue Synchronisationsbotschaften für den anderen Flexray-Bus.

Das erfindungsgemäße Gateway bildet zweckmäßigerweise einen Bestandteil eines Testwerkzeuges, mit dem eine Kommunikation zwischen dem ersten und dem zweiten Flexray-Bus getestet werden kann. Beispielsweise ist eine Kommunikation zwischen dem ersten und dem zweiten Flexray-Bus simulierbar. So kann beispielsweise das Testwerkzeug dazu vorgesehen sein, einen so genannten Restbus zu simulieren. Es ist auch möglich, dass das Testwerkzeug dafür vorgesehen ist, eine neu die an einen bereits bestehenden Flexray-Bus anzuschließende Komponente, zum Beispiel ein neues Motorsteuergerät, anzubinden. Vorzugsweise ist das Testwerkzeug dann dazu ausgestaltet, vom sozusagen alten Flexray-Bus stammende Nachrichten zu modifizieren, bevor sie an den neuen, zweiten Flexray-Bus weitergeleitet werden oder umgekehrt. Mithin ist also eine vorteilhafte Funktion eines derartigen Testwerkzeugs, dass eine Kommunikation auch manipulierbar ist. Wie bereits erwähnt, ist auch eine Überprüfungsfunktion vorteilhaft, das heißt dass das Testwerkzeug dazu vorgesehen ist, die Kommunikation zwischen dem ersten und dem zweiten Flexray-Bus zu überprüfen.

Eine vorteilhafte Funktion sieht vor, dass das Testwerkzeug Simulationsmittel zum Versenden an der ersten Bus-Schnittstelle empfangenen Daten in einer anderen Busnachricht an der zweiten Bus-Schnittstelle oder umgekehrt aufweist. Beispielsweise kann das Simulationsmittel oder Simulationsmodul dazu vorgesehen sein, eine Nachricht sozusagen um zu kodieren, d.h. dass beispielsweise die Nutzdaten von einem Zeitschlitz auf den anderen Zeitschlitz umcodiert werden, bevor sie vom einen Flexray-Bus auf den anderen Flexray-Bus weitergeleitet werden.

Das erfindungsgemäße Gateway hat zweckmäßigerweise mindestens einen Bus-Transceiver, der sozusagen die physikalische Ebene bzw. die physikalische Schicht des anzuschließenden Flexray-Busses bedient.

Nachfolgend wird ein Ausführungsbeispiel der Erfindung anhand der Zeichnung erläutert. Es zeigen:

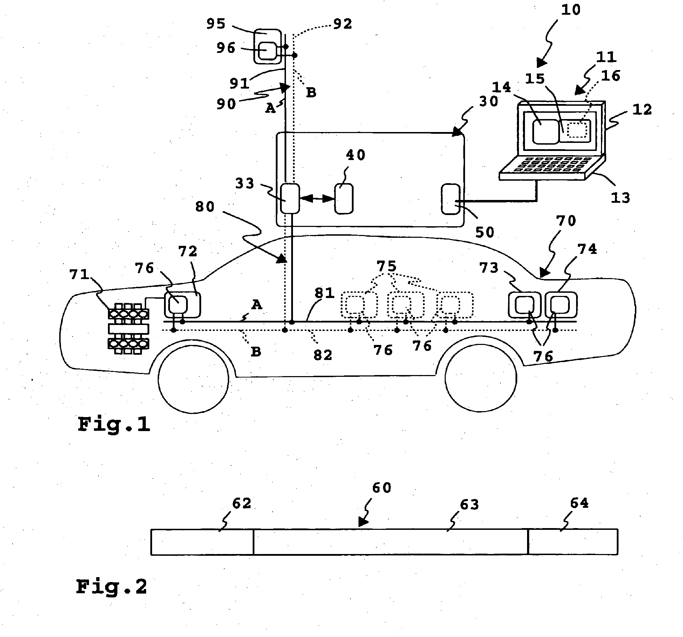

- Figur 1: eine schematische Ansicht eines Kraftfahrzeugs mit einem Flexray-Bus, an den ein zweiter Flexray-Bus mittels eines schematisch dargestellten erfindungsgemäßen Gateways angeschlossen ist,
- Figur 2: eine schematisch dargestellte Busnachricht, die auf dem Flexray-Bus des Kraftfahrzeugs versendet wird, und

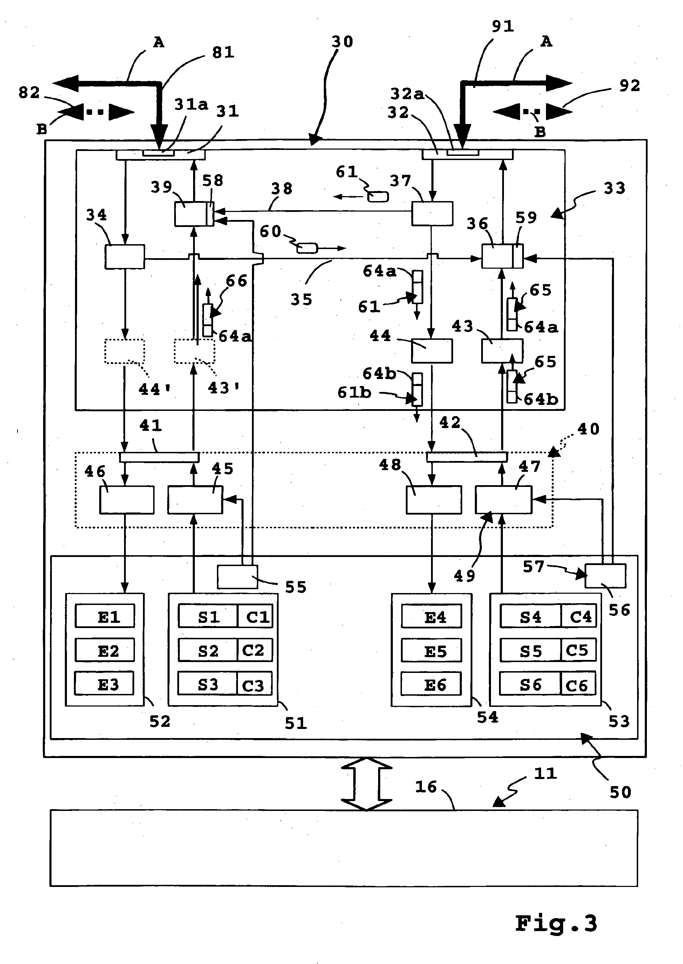

- Figur 3: eine schematische Ansicht eines erfindungsgemäßen Flexray-Gateways in Kombination mit einem Testwerkzeug oder als Bestandteil eines Testwerkzeuges.

Ein Kraftfahrzeug 70, beispielsweise ein Personenkraftwagen, hat einen Antriebsmotor 71, beispielsweise einen Verbrennungsmotor oder Elektromotor, sowie verschiedene andere Komponenten, zum Beispiel elektrische Fensterheber, eine Klimaanlage, eine Beleuchtung und dergleichen. Diese Komponenten werden durch beispielsweise elektrische Steuergeräte 72, 73 und 74, z.B. ein Motorsteuergerät für den Antriebsmotor 71, sowie weitere,

schematisch dargestellte Steuergeräte 75 gesteuert und überwacht, die an einen Flexray-Bus 80 angeschlossen sind. Der Flexray-Bus 80 hat einen so genannten A-Kanal 81 und einen sogenannten B-Kanal 82.

Allerdings wird bei dem Kraftfahrzeug 70 in an sich üblicher Weise nur einer der beiden Kanäle 81 oder 82 genutzt, vorliegend der A-Kanal 81. Daher ist der B-Kanal 82 nur in gestrichelten Linien dargestellt.

Die an den Flexray-Bus 80 angeschlossenen Steuergeräte 72-75 haben jeweils einen Flexray-Busankoppler 76 zur Kommunikation mit dem Flexray-Bus 80. Die Flexray-Busankoppler 76 enthalten beispielsweise Flexray-Controller, Transceiver und dergleichen in an sich bekannter Weise.

Der Flexray-Bus 80 soll um einen Flexray-Bus 90 ergänzt werden, d.h. um ein weiteres Bus-Cluster. An den Flexray-Bus 90 ist ein Steuergerät 95 angeschlossen, das an sich dazu vorgesehen ist, direkt mit den anderen Steuergeräten 72-75 zu kommunizieren. In einem späteren Entwicklungsstadium soll das Steuergerät 95, das einen Flexray-Busankoppler 96 in der Art der Flexray-Busankoppler 76 aufweist, an den bestehenden Flexray-Bus 80 angeschlossen werden. Zuvor muss jedoch sichergestellt werden, dass das Steuergerät 95 mit den anderen Steuergeräten 72-75 harmoniert bzw. kommunizieren kann. Diese Test- und Prüfaufgaben werden durch das nachfolgend detaillierter erläuterte Testwerkzeug 10, das einen Gateway 30 umfasst, erleichtert.

Der Flexray-Bus 80 bildet z.B. einen ersten Flexray-Bus, der Flexray-Bus 90 hingegen ist ein zweiter Flexray-Bus, wobei die beiden ersten und zweiten Busse 80 und 90 vom Gateway 30 gekoppelt werden. Die Steuergeräte 72-75 kommunizieren an dem A-Kanal 81 des Flexray-Busses 80 miteinander. Das Steuergerät 95 ist ebenfalls an einen A-Kanal angeschlossen, vorliegend an einen Kanal 91 des Flexray-Busses 90. Das Flexray-Gateway 30 koppelt die beiden Kanäle 81 und 91 miteinander. Die Kanäle 81 und 91 sind also Kanäle eines ersten Kanaltyps A.

Der zweite Kanal 82 des Flexray-Busses 80 und ein beim zweiten Flexray-Bus 90 optional vorhandener zweiter Kanal 92 sind Kanäle eines zweiten Kanaltyps B.

Der Gateway 30 umfasst erste und eine zweite Bus-Schnittstelle 31 und 32, an die die Flexray-Busse 80 und 90 mit ihren jeweiligen ersten Kanälen 81 und 91 (A-Kanälen) angeschlossen sind, z.B. an Kanal-Anschlüsse 31a und 32a. Die Kanal-Anschlüsse 31a und 32a umfassen z.B. Transceiver. Die Schnittstellen 31 und 32 sind durch Koppelmittel 33 miteinander gekoppelt, so dass beispielsweise eine vom Flexray-Bus 80 stammende Busnachricht 60 an der Schnittstelle 31 ankommt und von den Koppelmitteln 33 in einem Bypass-Modus direkt an die andere Bus-Schnittstelle 32 weiter geleitet oder durchgeroutet wird.

Die Busnachricht 60 wird beispielsweise von einem der Bus-Schnittstelle 31 zugeordneten Empfangsmodul 34 der Koppelmittel 33 empfangen und, was durch einen Pfeil 35 angedeutet ist, an ein Sendemodul 36 weitergeleitet, das der Bus-Schnittstelle 32 zugeordnet ist. Das Sendemodul 36 wiederum gibt die Busnachricht 60 an die zweite Bus-Schnittstelle 32 zum Versenden auf dem zweiten Flexray-Bus 90 weiter.

In umgekehrter Richtung, d.h. vom Flexray-Bus 90 zum Flexray-Bus 80 funktioniert die Kommunikation sinngemäß umgekehrt, das heißt eine an der zweiten Bus-Schnittstelle 32 empfangene Busnachricht 61 wird von einem Empfangsmodul 37 empfangen und - angedeutet durch einen Pfeil 38 - zu einem Sendemodul 39 weitergeleitet, welche die Busnachricht 61 an der ersten Bus-Schnittstelle 31 auf den ersten Flexray-Bus 80 ausgibt.

Nun könnte an sich eine Übertragung der Busnachricht 60 vom ersten Flexray-Bus 80 zum zweiten Flexray-Bus 90 zu einer unerwünschten Rückkopplung oder Mitkopplung führen, wenn nämlich diese Busnachricht 60 sozusagen auf dem Flexray-Bus 90 zum Empfangsmodul 37 zurückgelangt und dieses dann genau dieselbe, an sich schon über den ersten Flexray-Bus 80 einmal übertragene Busnachricht 60 auf diesen ersten Flexray-Bus 80 zurücksendet. Dieser Rückkopplungseffekt wird dadurch unterbunden, dass das Empfangsmodul 37 die Busnachricht 60 nicht über die Verbindung gemäß Pfeil 38 zurücksendet, sondern diese Verbindung für die bereits zur zweiten Bus-Schnittstelle 32 übermittelte Busnachricht 60 sozusagen blockiert.

Der Gateway 30 enthält ferner einen Flexray-Controller 40, der an sich bei der oben beschriebenen Bypass-Funktion nicht aktiv ist.

Der Flexray-Controller 40 ist ein zertifiziertes, geprüftes Bauelement, wobei hier Hardware und/oder Software umfasst sein soll. Der Flexray-Controller 40 leistet wesentliche Funktionen, die zum Betrieb eines Flexray-Busses erforderlich sind, beispielsweise Synchronisationsfunktionen und dergleichen. Insofern ist der Flexray-Controller 40 bei dem Gateway 30 ein wesentliches Bauteil. Beispielsweise ist der Flexray-Controller 40 beim Hochlauf des Gateways 30, das heißt dann, wenn die Flexray-Busse 80 und 90 starten, für die Synchronisation bzw. Anpassung der Busse 80 und 90 bzw. der Anpassung des Gateways 30 an den Bustakt der Busse 80 und/oder 90 zuständig.

Der Flexray-Controller 40 kann also ein standardisiertes Bauteil sein, wobei der Flexray-Controller 40 wie jeder übliche übliche Flexray-Controller zwei Kanal-Schnittstellen hat, nämlich eine erste und eine zweite Kanal-Schnittstelle 41 und 42, die einen Kanal eines ersten Kanaltyps A und eines zweiten Kanaltyps B eines Flexray-Busses bedienen können. Beispielsweise ist der erste Kanal ein A-Kanal, der zweite Kanal ein B-Kanal, so dass die erste Kanal-Schnittstelle 41 zur Bedienung eines A-Kanals oder eines Kanals eines ersten Kanaltyps A geeignet ist, während die zweite Kanal-Schnittstelle 42 zu Bedienung eines B-Kanals und somit eines Kanals eines zweiten Kanaltyps B ausgestaltet ist. Somit könnte also die Kanal-Schnittstelle 41 direkt mit Bus-Schnittstelle 31 verbunden werden, die ja an den A-Kanal 81 bzw. den Kanal des ersten Kanaltyps A des ersten Flexray-Busses 80 angeschlossen ist. Die zweite Kanal-Schnittstelle 42, die dem zweiten Kanaltyp B bzw. B-Kanal-Typ zugeordnet ist, kann nicht einfach an die dem dem ersten Kanaltyp A zugeordnete Bus-Schnittstelle 32, die den A-Kanal 91 des zweiten Flexray-Busses 90 bedient, angeschlossen werden.

Hier schaffen Anpassungsmodule 43 und 44 der Koppelmittel 33 Abhilfe. Der Flexray-Controller 40 kann somit an einer Einspeiseschnittstelle 49 bereitgestellte Busnachrichten oder zur Erstellung von Busnachrichten vorgesehene Daten aufbereiten, um Busnachrichten des zweiten Kanaltyps (B-Kanal-Typ) zum Weiterversenden durch die Koppelmittel 33 an seiner zweiten Kanal-Schnittstelle 42 bereitstellen, die dann beispielsweise vom Anpassungsmodul 43 zu Busnachrichten des ersten Kanaltyps (A-Kanal-Typ) umgewandelt werden, so dass sie vom Sendemodul 36 an der Bus-Schnittstelle 32 des Gateways 30 ausgegeben werden können.

In Empfangsrichtung ist das Anpassungsmodul 44 aktiv, d.h. dass zum Beispiel die vom Empfangsmodul 37 empfangene Busnachricht 61, die eine Busnachricht des ersten Kanaltyps (A-Kanal-Typ) ist, von dem Anpassungsmodul 44 in eine Busnachricht des zweiten Kanaltyps, also in eine B-Kanal-Busnachricht 61b umgewandelt bzw. so angepasst wird, dass der Flexray-Controller 40 die Busnachricht 61b an seiner zweiten Kanal-Schnittstelle 42 empfangen kann.

Die Busnachrichten 60 und 61 besteht beispielsweise aus einem Kopf 62, einem Nutzinhalt 63 und einer Prüfinformation 64.

Das Anpassungsmodul 44 ersetzt beispielsweise bei der Busnachricht 61 deren dem ersten Kanaltyp (A Kanal) zugeordnete Prüfinformation 64a gegen eine dem zweiten Kanaltyp (B-Kanal) zugeordnete Prüfinformation 64b, so dass die zweite Kanal-Schnittstelle 42 des Flexray-Controllers 40 diese modifizierte Busnachricht 61b sozusagen versteht.

Das Gateway 30 hat eine Test-Schnittstelle 50, die beispielsweise ein Monitoring oder Mithören der Kommunikation zwischen den beiden Flexray-Bussen 80 und 90, ein Einspeisen von Simulationsbusnachrichten, ein Überprüfen der Kommunikation und dergleichen ermöglicht.

An die Test-Schnittstelle 50 ist beispielsweise ein Personal-Computer 11 des Testwerkzeuges 10 angeschlossen oder anschließbar. Das Testwerkzeug 10 verfügt somit über Ausgabemittel 12, zum Beispiel ein Display des Computers 11, und Eingabemittel 13, beispielsweise eine Tastatur, Maus, Spracherkennung oder dergleichen des Computers 11, so dass ein Bediener Einfluss auf den Datenverkehr des Gateways 30 über die Test-Schnittstelle 50 nehmen kann und/oder diesen Datenverkehr überwachen kann. Der Computer 11 verfügt weiterhin über einen Prozessor 14 sowie einen Speicher 15, wobei in dem Speicher 15 ein Testmodul 16 gespeichert ist, dessen Programmcode der Prozessor 14 ausführen kann.

Das Gateway 30 könnte beispielsweise als eine Einschubkarte ausgestaltet sein, die in einem Modulschacht des Computers 11 anordenbar ist, um mit dem Prozessor 14 sowie den übrigen Komponenten des Computers 11 zu kommunizieren. Dann umfasst die Test-Schnittstelle 50 beispielsweise eine PCMIA- oder PCI-Schnittstelle oder dergleichen. Selbstverständlich ist es auch möglich, dass das Gateway 30 einen integralen Bestandteil eines Testwerkzeuges bildet, d.h. dass beispielsweise der Computer 11 das Gateway 30 integral beinhaltet oder dergleichen. Auf die architektonischen Details kommt es jedoch hier nicht an. Vielmehr ist es möglich, den Datenverkehr über das Gateway 30 mithilfe des Computers 11 bzw. des Testmoduls 16 zu überwachen, zu manipulieren und dergleichen. Das wird nachfolgend deutlich:

Der Flexray-Controller 40 hat beispielsweise ein A-Kanal-Empfangsmodul 46, das an der A-Kanal-Schnittstelle bzw. erste Kanal-Schnittstelle 41 empfangene Busnachrichten, zum Beispiel die Busnachricht 60, empfangen und in einen A-Kanal-Empfangspuffer 52 der Test -Schnittstelle 50 einschreiben kann. Das Testmodul 16 kommuniziert mit der Test-Schnittstelle 50, kann also beispielsweise den Empfangspuffer 52 auslesen, in welchem beispielhaft Eingangsdaten E1, E2 und E3 eingeschrieben sind, die beispielsweise aus der Busnachricht 60 oder anderen, nicht dargestellten Busnachrichten stammen.

Sinngemäß ist auch dem Flexray-Bus 90 ein derartiger Eingangspuffer zugeordnet, nämlich ein der zweite Kanal-Schnittstelle 42 zugeordneter, von einem B-Kanal-Empfangsmodul 48 zu beschreibender B-Kanal-Empfangspuffer 54. In den Empfangspuffer 54 schreibt das Empfangsmodul 48 beispielsweise auf dem zweiten Flexray-Bus 90 empfangene Busnachrichten bzw. die in diesen Busnachrichten empfangene Daten ein, von denen beispielhaft Eingangsdaten E4, E5 und E6 dargestellt sind. Das Testmodul 16 kann selbstverständlich auch den Eingangspuffer oder Empfangspuffer 54 auslesen.

Auf diesem Wege ist also beispielhaft ein Monitoring dargestellt. Selbstverständlich sind auch andere architektonische Ansätze möglich.

Zum Einspeisen von Simulationsbusnachrichten oder auch zum umcodieren von Daten von der einen, empfangenen Busnachricht in eine andere, zu sendende Busnachricht sind ein A-Kanal-Sendepuffer 51 und B-Kanal-Sendepuffer 53 vorgesehen, die von A- und B-Kanal-Sendemodulen 45 und 47 des Flexray-Controllers 40 ausgelesen werden, um auf dem ersten Flexray-Bus 80 oder dem zweiten Flexray-Bus 90 vom Testmodul 16 bereitgestellte Daten als Flexray-Busnachrichten zu versenden.

In den Sendepuffern 51 und 53 sind beispielsweise zu sendende Daten S1, S2 und S3 bzw. S4, S5 und S6 gespeichert. Zu diesen Daten S1 bis S6 sind Steuerinformationen C1 bis C6 in den Sendepuffern 51 und 53 gespeichert, anhand derer Steuermodule 55 und 56 die Sendemodule 45 und 47 zum Auslesen eines jeweiligen Datensatzes S1, S2 und S3 bzw. S4, S5 und S6 instruieren, um anhand dieses Datensatzes dann eine Busnachricht zum Versand auf den Flexray-Bussen 80 oder 90 vorzubereiten. Die Steuermodule 55 und 56 bilden Steuermittel 57.

Die Einspeisung von Busnachrichten verläuft beispielsweise folgendermaßen: das Steuermodul 56 steuert das Sendemodul 47 des Flexray-Controllers 40 zum Auslesen der Daten S4 an, wenn die Steuerinformation C4 dies so vorsieht. Beispielsweise ist die Steuerinformation C4 logisch "1". Der Flexray-Controller 40, d.h. dass Sendemodul 47 bildet anhand der Daten S4 eine Simulationsbusnachricht 65 mit einer Prüfinformation 64b und gibt diese an der zweite Kanal-Schnittstelle 42 aus. Das Anpassungsmodul 43 tauscht die Prüfinformation 64b gegen eine A-Kanal-Prüfinformation 64a aus. Das Steuermodul 56 wiederum steuert dann das Sendemodul 36 der Koppelmittel 33 zum Senden der Simulationsbusnachricht 65 beispielsweise anstelle der Busnachricht 60 an. Das Sendemodul 36 hat beispielsweise ein vorgeschaltetes Schaltmodul 59, das einen integralen Bestandteil des Sendemoduls 36 bilden kann. Das Schaltmodul 59 instruiert das Sendemodul 36 zum Senden der Simulationsbusnachricht 65.

Bei dem Flexray-Bus 80 ist keine Anpassung an einen anderen Kanaltyp nötig. So kann beispielsweise das Steuermodul 55 den Flexray-Controller 40, d.h. das A-Kanal-Sendemodul 45 direkt ansteuern, anhand des Datensatzes S1 oder S2 eine Simulationsbusnachricht 66 zu generieren und an der Kanal-Schnittstelle 41 auszugeben. Weiterhin steuert das Steuermodul 55 ein Schaltmodul 58, das beispielsweise an Bord des Sendemoduls 39 der Koppelmittel 33 ist, dazu an, beispielsweise anstelle der Busnachricht 61 die Simulationsbusnachricht 66 an der Bus-Schnittstelle 31 auszugeben.

Die Steuerinformationen C2, C3 oder C5 und C6 können beispielsweise anzeigen, dass die Datensätze S2, S3 oder S5 bzw. S6 anders als die Datensätze S1 und S4 nicht zu Busnachrichten gewandelt werden sollen.

Anhand der Steuerinformationen C1-C6 ist es möglich, dass das Gateway 30 beispielsweise manche Frames eines Sendezyklusses manipuliert, d.h. anstelle eines an sich empfangenen Frames einen anderen, Simulationsframe generiert und diesen dann versendet oder in einem Bypass-Modus Busnachrichten transparent vom einen Flexray-Bus zum anderen Flexray-Bus durchleitet.

Selbstverständlich ist auch ein reiner mit Mithör- oder Überwachungs-Modus möglich, bei dem der über das Gateway laufende Busverkehr oder Datenverkehr nicht beeinflusst wird, möglich.

Bei der obigen Erläuterung des Ausführungsbeispiels wurden einzelne Module eines Gateways beschrieben. Selbstverständlich kann es sich bei einem solchen Modul um einen logischen Baustein, eine Software-Funktion oder dergleichen handeln. Es wird allerdings aufgrund der obigen Beschreibung ein Weg gezeigt, wie ein erfindungsgemäßes Gateway grundsätzlich aufgebaut sein kann.

## Patentansprüche

1. Flexray-Gateway mit einer ersten Bus-Schnittstelle (31) zum Anschluss eines ersten Flexray-Busses (80) und einer zweiten Bus-Schnittstelle (32) zum Anschluss eines zweiten Flexray-Busses (90), wobei der Flexray-Gateway (30) Koppelmittel (33) zum Koppeln eines ersten Flexray-Busses (80) mit einem zweiten Flexray-Bus (90) und zur Übertragung von Busnachrichten (60, 61) zwischen dem ersten und dem zweiten Flexray-Bus (90) aufweist, wobei der Flexray-Gateway (30) einen Flexray-Controller (40) mit einer ersten Kanal-Schnittstelle (41) zum Senden und Empfangen von Busnachrichten (60, 61) eines ersten Kanaltyps (A) eines Flexray-Busses (80, 90) und einer zweiten Kanal-Schnittstelle (42) zum Senden und Empfangen von Busnachrichten (60, 61) eines zweiten Kanaltyps (B) eines Flexray-Busses (80, 90) aufweist, **dadurch gekennzeichnet, dass** die Koppelmittel (33) zum Koppeln eines zum Übertragen von Busnachrichten (60, 61) des ersten Kanaltyps (A) vorgesehenen Kanal-Anschlusses (31a) der ersten Bus-Schnittstelle (31) mit einem ebenfalls zum Übertragen von Busnachrichten (60, 61) des ersten Kanaltyps (A) vorgesehenen Kanal-Anschluss (32a) der zweiten Bus-Schnittstelle (32) ausgestaltet sind, und dass die Koppelmittel (33) mindestens ein Anpassungsmodul (43, 44) zum Anpassen von an der zweiten Bus-Schnittstelle (32) empfangenen Busnachrichten (60, 61) des ersten Kanaltyps (A) in Busnachrichten (60, 61) des zweiten Kanaltyps (B) und zur Weiterleitung an die zweite Kanal-Schnittstelle (42) des Flexray-Controllers (40) und/oder zum Anpassen von über die zweite Kanal-Schnittstelle (42) des Flexray-Controllers (40) gesendeten Busnachrichten (60, 61) des zweiten Kanaltyps (B) in Busnachrichten (60, 61) des ersten Kanaltyps (A) und zur Weiterleitung an die zweite Bus-Schnittstelle (32) aufweist.

2. Flexray-Gateway nach Anspruch 1, **dadurch gekennzeichnet, dass** der Flexray-Controller (40) zum Erzeugen von Simulationsbusnachrichten (65, 66) für den Versand an der ersten oder zweiten Bus-Schnittstelle (31, 32) anhand von an einer Einspeiseschnittstelle (49) des Flexray-Gateways (30) bereitgestellten Daten (S4-S6) ausgestaltet ist.

3. Flexray-Gateway nach Anspruch 2, **dadurch gekennzeichnet, dass** der Flexray-Controller (40) zum Ausgeben der Simulationsbusnachricht (65, 66) an seiner zweiten Kanal-Schnittstelle (42) als eine Busnachricht des zweiten Kanaltyps (B) ausgestaltet ist und dass das mindestens eine Anpassungsmodul (43, 44) zum Anpassen der Simulationsbusnachricht (65, 66) in eine Busnachricht des ersten Kanaltyps (A) ausgestaltet ist.

4. Flexray-Gateway nach einem der vorhergehenden Ansprüche, **dadurch gekennzeichnet, dass** es mindestens ein Schaltmodul (58, 59) zum Umschalten zwischen einer Bypass-Funktion, in der die Koppelmittel (33) eine von dem ersten Flexray-Bus (80) empfangene Busnachricht (60, 61) an der zweiten Bus-Schnittstelle (32) und/oder eine von dem zweiten Flexray-Bus (90) empfangene Busnachricht (60, 61) an der ersten Bus-Schnittstelle (31) unverändert ausgeben, und einer Simulationsfunktion aufweist, in der die Koppelmittel (33) eine von dem Flexray-Controller (40) bereitgestellte Simulationsbusnachricht (65, 66), insbesondere anstelle einer an einer der Bus-Schnittstellen (31, 32) des Flexray-Gateways (30) empfangenen Busnachricht (60, 61), an der ersten oder zweiten Bus-Schnittstelle (31, 32) ausgeben.

5. Flexray-Gateway nach Anspruch 4, **dadurch gekennzeichnet, dass** das mindestens eine Schaltmodul (58, 59) zwischen dem mindestens einen Anpassungsmodul (43, 44) und der zweiten Bus-Schnittstelle (32) angeordnet ist.

6. Flexray-Gateway nach Anspruch 4 oder 5, **dadurch gekennzeichnet, dass** die Einspeiseschnittstelle (49) einen Pufferspeicher (53) umfasst, in dem Daten (S4-S6) für mindestens eine Simulationsbusnachricht (65, 66) bereitstellbar sind, und dass in dem Pufferspeicher (53) eine den Daten (S4-S6) zugeordnete Steuerinformation (C4-C6) speicherbar sind, wobei Steuermittel vorgesehen sind, die das mindestens eine Schaltmodul (58, 59) anhand der Steuerinformation (C4-C6) zum Umschalten zwischen der Bypass-Funktion, in der das Schaltmodul (58, 59) eine Weiterleitung einer anhand der Daten (S4-S6) aus dem Pufferspeicher (53) erzeugten Simulationsnachricht blockieren, und der Simulationsfunktion ansteuert, in der das mindestens eine Schaltmodul (58, 59) eine anhand der Daten (S4-S6) in dem Pufferspeicher (53) erzeugte Simulationsnachricht (65) weiterleitet.

7. Flexray-Gateway nach einem der vorhergehenden Ansprüche, **dadurch gekennzeichnet, dass** der Flexray-Controller (40) eine Monitoring-Schnittstelle oder Test-Schnittstelle (50) zum Ausgeben von zwischen der ersten und der zweiten Bus-Schnittstelle (31, 32) übertragenen Busnachrichten (60, 61) aufweist.

8. Flexray-Gateway nach einem der vorhergehenden Ansprüche, **dadurch gekennzeichnet, dass** die Koppelmittel (33) an der ersten Bus-Schnittstelle (31) empfangene Busnachrichten (60, 61) an die zweite Bus-Schnittstelle (32) weiterleiten und zur Vermeidung einer Rückkopplung eine Weiterleitung von an der zweiten Bus-Schnittstelle (32) empfangenen Busnachrichten (60, 61) an die erste Bus-Schnittstelle (31) blockieren oder umgekehrt an der zweiten Bus-Schnittstelle (32) empfangene Busnachrichten (60, 61) an die erste Bus-Schnittstelle (31) weiterleiten und zur Vermeidung einer Rückkopplung eine Weiterleitung von an der ersten Bus-Schnittstelle (31) empfangenen Busnachrichten (60, 61) an die zweite Bus-Schnittstelle (32) blockieren.

9. Flexray-Gateway nach einem der vorhergehenden Ansprüche, **dadurch gekennzeichnet, dass** der erste Kanaltyp (A) einem A-Kanal oder einem B-Kanal eines Flexray-Busses (80, 90) entspricht und/oder dass das mindestens eine Anpassungsmodul (43, 44) zur Überarbeitung oder zum Ersetzen einer Prüfinformation (64) der anzupassenden Busnachrichten (60, 61) ausgestaltet ist.

10. Flexray-Gateway nach einem der vorhergehenden Ansprüche, **dadurch gekennzeichnet, dass** der Flexray-Controller (40) zur Zeit-Synchronisierung der ersten Bus-Schnittstelle (31) mit der zweiten Bus-Schnittstelle (32), insbesondere während einer Bus-Hochlaufphase, ausgestaltet ist.

11. Flexray-Gateway nach einem der vorhergehenden Ansprüche, **dadurch gekennzeichnet, dass** er einen Bestandteil eines insbesondere für ein Kraftfahrzeug (70) vorgesehenen Testwerkzeuges (10) bildet, mit dem eine Kommunikation zwischen dem ersten und dem zweiten Flexray-Bus simulierbar und/oder manipulierbar und/oder überprüfbar ist.

12. Flexray-Gateway nach Anspruch 11, **dadurch gekennzeichnet, dass** das Testwerkzeug (10) Simulationsmittel zum Versenden an der ersten Bus-Schnittstelle (31) empfangenen Daten in einer anderen Busnachricht (60, 61), insbesondere in einem anderen Zeitschlitz, an der zweiten Bus-Schnittstelle (32) und/oder umgekehrt aufweist.

13. Verfahren zum Betreiben eines Flexray-Gateways (30) mit einer ersten Bus-Schnittstelle (31) zum Anschluss eines ersten Flexray-Busses (80) und einer zweiten Bus-Schnittstelle (32) zum Anschluss eines zweiten Flexray-Busses (90), mit den Schritten:
- Koppeln eines zum Übertragen von Busnachrichten (60, 61) des ersten Kanaltyps (A) vorgesehenen Kanal-Anschlusses (31a) der ersten Bus-Schnittstelle (31) mit einem ebenfalls zum Übertragen von Busnachrichten (60, 61) des ersten Kanaltyps (A) vorgesehenen Kanal-Anschluss der zweiten Bus-Schnittstelle (32) und Übertragen von Busnachrichten (60, 61) zwischen den Kanal-Anschlüssen,
- Senden und Empfangen von Busnachrichten (60, 61) eines ersten Kanaltyps (A) eines Flexray-Busses (80, 90) an einer ersten Kanal-Schnittstelle (41) eines Flexray-Controllers (40) und/oder Senden und Empfangen von Busnachrichten (60, 61) eines zweiten Kanaltyps (B) eines Flexray-Busses (80, 90) an einer zweiten Kanal-Schnittstelle (42) des Flexray-Controllers (40),
- und Anpassen von an der zweiten Bus-Schnittstelle (32) empfangenen Busnachrichten (60, 61) des ersten Kanaltyps (A) in Busnachrichten (60, 61) des zweiten Kanaltyps (B) und Weiterleitung an die zweite Kanal-Schnittstelle (42) des Flexray-Controllers (40)
- und/oder Anpassen von über die zweite Kanal-Schnittstelle (42) des Flexray-Controllers (40) gesendeten Busnachrichten (60, 61) des zweiten Kanaltyps (B) in Busnachrichten (60, 61) des ersten Kanaltyps (A) und Weiterleitung an die zweite Bus-Schnittstelle (32) anhand von mindestens eines Anpassungsmoduls (43, 44).

## Claims

1. Flexray gateway comprising a first bus interface (31) for connecting a first Flexray bus (80) and a second bus interface (32) for connecting a second Flexray bus (90), wherein the Flexray gateway (30) comprises coupling means (33) for coupling a first Flexray bus (80) to a second Flexray bus (90) and for transmitting bus messages (60, 61) between the first and the second Flexray bus (90), wherein the Flexray gateway (30) comprises a Flexray controller (40) with a first channel interface (41) for transmitting and receiving bus messages (60, 61) of a first channel type (A) of a Flexray bus (80, 90) and a second channel interface (42) for transmitting and receiving bus messages (60, 61) of a second channel type (B) of a Flexray bus (80, 90), **characterised in that** the coupling means (33) are configured for coupling a channel connection (31 a) of the first bus interface (31), which is provided for transmitting bus messages (60, 61) of the first channel type (A), to a channel connection (32a) of the second bus interface (32), which is likewise provided for transmitting bus messages (60, 61) of the first channel type (A), and **in that** the coupling means (33) comprise at least one adapting module (43, 44) for adapting bus messages (60, 61) of the first channel type (A) received at the second bus interface (32) to bus messages (60, 61) of the second channel type (B) and for relaying them to the second channel interface (42) of the Flexray controller (40) and/or for adapting bus messages (60, 61) of the second channel type (B) transmitted via the second channel interface (42) of the Flexray controller (40) to bus messages (60, 61) of the first channel type (A) and for relaying them to the second bus interface (32).

2. Flexray gateway according to claim 1, **characterised in that** the Flexray controller (40) is designed for generating simulation bus messages (65, 66) for dispatch at the first or second bus interface (31, 32), using data (S4-S6) provided at a feed-in interface (49) of the Flexray gateway (10).

3. Flexray gateway according to claim 2, **characterised in that** the Flexray controller (40) is designed for outputting the simulation bus messages (65, 66) at its second channel interface (42) as a bus message of the second channel type (B), and **in that** the at least one adapting module (43, 44) is designed for adapting the simulation bus message (65, 66) to a bus message of the first channel type (A).

4. Flexray gateway according to any of the preceding claims, **characterised in that** it comprises at least one switching module (58, 59) for switching between a bypass mode, in which the coupling means (33) output without change a bus message (60, 61) received by the first Flexray bus (80) at the second bus interface (32) and/or a bus message (60, 61) received by the second Flexray bus (90) at the first bus interface (32), and a simulation mode, in which the coupling means (33) output a simulation bus message (65, 66) made available by the Flexray controller (40), in particular in place of a bus message (60, 61) received at one of the bus interfaces (31, 32) of the Flexray gateway (30), at the first or second bus interface (31, 32).

5. Flexray gateway according to claim 4, **characterised in that** the at least one switching module (58, 59) is located between the at least one adapting module (43, 44) and the second bus interface (32).

6. Flexray gateway according to claim 4 or 5, **characterised in that** the feed-in interface (49) comprises a buffer (53) in which data (S4-S6) for at least one simulation bus message (65, 66) can be made available, and **in that** a control information (C4-C6) assigned to the data (S4-S6) can be stored in the buffer (53), wherein control means are provided which select the at least one switching module (58, 59) for switching between the bypass mode, in which the switching module (58, 59) blocks the relaying of a simulation message generated from the data (S4-S6) in the buffer (53), and the simulation mode, in which the at least one switching module (58, 59) relays a simulation message (65) generated from the data (S4-S6) in the buffer (53).

7. Flexray gateway according to any of the preceding claims, **characterised in that** the Flexray controller (40) comprises a monitoring interface or a test interface (50) for outputting bus messages (60, 61) transmitted between the first and second bus interfaces (31, 32).

8. Flexray gateway according to any of the preceding claims, **characterised in that** the coupling means (33) relay bus messages (60, 61) received at the first bus interface (31) to the second bus interface (32), while blocking a relaying of bus messages (60, 61) received at the second bus interface (32) to the first bus interface (31) to avoid feedback, or **in that** the coupling means (33) relay bus messages (60, 61) received at the second bus (32) interface to the first bus interface (31), while blocking a relaying of bus messages (60, 61) received at the first bus interface (31) to the second bus interface (32) to avoid feedback.

9. Flexray gateway according to any of the preceding claims, **characterised in that** the first channel type (A) corresponds to an A channel or a B channel of a Flexray bus (80, 90), and/or **in that** the at least one adapting module (43, 44) is provided for modifying or for replacing a test information (64) of the bus messages (60, 61) to be adapted.

10. Flexray gateway according to any of the preceding claims, **characterised in that** the Flexray controller (40) is designed for time-synchronising the first bus interface (31) with the second bus interface (32), in particular during a bus starting phase.

11. Flexray gateway according to any of the preceding claims, **characterised in that** it forms a part of a testing tool (10) which is in particular provided for a motor vehicle (70) and with which a communication between the first and the second Flexray bus can be simulated and/or manipulated and/or tested.

12. Flexray gateway according to claim 11, **characterised in that** the testing tool (10) comprises simulation means for sending data received at the first bus interface (31) in another bus message (60, 61), in particular in another time slot, to the second bus interface (32) and/or vice versa.

13. Method for operating a Flexray gateway (30) comprising a first bus interface (31) for connecting a first Flexray bus (80) and a second bus interface (32) for connecting a second Flexray bus (90), comprising the steps of:
- coupling a channel connection (31a) of the first bus interface (31), which is provided for transmitting bus messages (60, 61) of the first channel type (A), to a channel connection of the second bus interface (32), which is likewise provided for transmitting bus messages (60, 61) of the first channel type (A), and transmitting bus messages (60, 61) between the channel connections,
- transmitting and receiving bus messages (60, 61) of a first channel type (A) of a Flexray bus (80, 90) at a first channel interface (41) of a Flexray controller (40) and/or transmitting and receiving bus messages (60, 61) of a second channel type (B) of Flexray bus (80, 90) at a second channel interface (42) of the Flexray controller (40),
- and adapting bus messages (60, 61) of the first channel type (A) received at the second bus interface (32) to bus messages (60, 61) of the second channel type (B) and relaying them to the second channel interface (32) of the Flexray controller (40),
- and/or adapting bus messages (60, 61) of the second channel type (B) transmitted via the second channel interface (42) of the Flexray controller (40) to bus messages (60, 61) of the first channel type (A) and relaying them to the second bus interface (32) using at least one adapting module 43, 44).

## Revendications

1. Passerelle Flexray comprenant une première interface bus (31) destinée à être connectée à un premier bus Flexray (80) et comprenant une deuxième interface bus (32) destinée à être connectée à un deuxième bus Flexray (90), sachant que la passerelle Flexray (30) présente des moyens de couplage (33) servant à coupler un premier bus Flexray (80) à un deuxième bus Flexray (90) et servant à transmettre des messages de bus (60, 61) entre le premier et le deuxième bus Flexray (90), sachant que la passerelle Flexray (30) présente un contrôleur Flexray (40) doté d'une première interface de canal (41) servant à émettre et à envoyer des messages de bus (60, 61) d'un premier type de canal (A) d'un bus Flexray (80, 90) et doté d'une deuxième interface de canal (42) servant à émettre et à recevoir des messages de bus (60, 61) d'un deuxième type de canal (B) d'un bus Flexray (80, 90), **caractérisée en ce que** les moyens de couplage (33) sont configurés pour coupler une connexion de canal (31 a), prévue pour transférer des messages de bus (60, 61) du premier type de canal (A), de la première interface de bus (31) à une connexion de canal (32a), prévue de la même manière pour transmettre des messages de bus (60, 61) du premier type de canal (A), de la deuxième interface de bus (32), et en ce les moyens de couplage (33) présentent au moins un module d'adaptation (43, 44) servant à adapter des messages de bus (60, 61), reçus au niveau de la deuxième interface de bus (32), du premier type de canal (A) en des messages de bus (60, 61) du deuxième type de canal (B) et servant à les transférer à la deuxième interface de canal (42) du contrôleur Flexray (40) et/ou servant à adapter des messages de bus (60, 61), envoyés par l'intermédiaire de la deuxième interface de canal (42) du contrôleur Flexray (40), du deuxième type de canal (B) en des messages de bus (60, 61) du premier type de canal (A) et servant à les transférer à la deuxième interface de bus (32).

2. Passerelle Flexray selon la revendication 1, **caractérisée en ce que** le contrôleur Flexray (40) est configuré pour produire des messages de bus de simulation (65, 66) pour l'envoi à la première ou à la deuxième interface de bus (31, 32) à l'aide de données (S4 - S6) fournies au niveau d'une interface d'injection (49) de la passerelle Flexray (30).

3. Passerelle Flexray selon la revendication 2, **caractérisée en ce que** le contrôleur Flexray (40) est configuré pour délivrer le message de bus de simulation (65, 66) à sa deuxième interface de canal (42) sous la forme d'un message de bus du deuxième type de canal (B), et **en ce que** le module d'adaptation (43, 44) au moins au nombre de un est configuré pour adapter le message de bus de simulation (65, 66) en un message de bus du premier type de canal (A).

4. Passerelle Flexray selon l'une quelconque des revendications précédentes, **caractérisée en ce qu'**elle présente au moins un module de commutation (58, 59) servant à passer d'une fonction de bypass, dans laquelle les moyens de couplage (33) délivrent sans modification un message de bus (60, 61) reçu par le premier bus Flexray (80) à la deuxième interface de bus (32) et/ou un message de bus (60, 61) reçu par le deuxième bus Flexray (90) à la première interface de bus (31), et une fonction de simulation, dans laquelle les moyens de couplage (33) délivrent un message de bus de simulation (65, 66) fourni par le contrôleur Flexray (40), en particulier en lieu et place d'un message de bus (60, 61) reçu au niveau d'une des interfaces de bus (31, 32) de la passerelle Flexray (30), à la première ou à la deuxième interface de bus (31, 32).

5. Passerelle Flexray selon la revendication 4, **caractérisée en ce que** le module de commutation (58, 59) au moins au nombre de un est disposé entre le module d'adaptation (43, 44) au moins au nombre de un et la deuxième interface de bus (32).

6. Passerelle Flexray selon la revendication 4 ou 5, **caractérisée en ce que** l'interface d'injection (49) comprend une mémoire tampon (53), dans laquelle des données (S4 - S6) peuvent être fournies pour au moins un message de bus de simulation (65, 66), et **en ce qu'**une information de commande (C4 - C6) associée aux données (S4 - S6) peut être mémorisée dans la mémoire tampon (53), sachant que sont prévus des moyens de commande, qui commandent le module de commutation (58, 59) au moins au nombre de un à l'aide de l'information de commande (C4 - C6) servant à passer entre la fonction de bypass, dans laquelle le module de commutation (58, 59) bloque un transfert d'un message de simulation produit à l'aide des données (S4 - S6) en provenance de la mémoire tampon (53), et la fonction de simulation, dans laquelle le module de commutation (58, 59) au moins au nombre de un transfère un message de simulation (65) produit à l'aide des données (S4 - S6) dans la mémoire tampon (53).

7. Passerelle Flexray selon l'une quelconque des revendications précédentes, **caractérisée en ce que** le contrôleur Flexray (40) présente une interface de suivi ou une interface de test (50) servant à délivrer des messages de bus (60, 61) transmis entre la première interface de bus et la deuxième interface de bus (31, 32).

8. Passerelle Flexray selon l'une quelconque des revendications précédentes, **caractérisée en ce que** les moyens de couplage (33) transfèrent des messages de bus (60, 61) reçus au niveau de la première interface de bus (31) à la deuxième interface de bus (32) et bloquent, afin d'éviter un couplage rétroactif, un transfert à la première interface de bus (31) des messages de bus (60, 61) reçus au niveau de la deuxième interface de bus (32) ou inversement transfèrent à la première interface de bus (31) des messages de bus (60, 61) reçus au niveau de la deuxième interface de bus (32) et bloquent, afin d'éviter un couplage rétroactif, un transfert à la deuxième interface de bus (32) de messages de bus (60, 61) reçus au niveau de la première interface de bus (31).

9. Passerelle Flexray selon l'une quelconque des revendications précédentes, **caractérisée en ce que** le premier type de canal (A) correspond à un canal A ou à un canal B d'un bus Flexray (80, 90), et/ou **en ce que** le module d'adaptation (43, 44) au moins au nombre de un est configuré pour réviser ou pour remplacer une information de contrôle (64) des messages de bus (60, 61) à adapter.

10. Passerelle Flexray selon l'une quelconque des revendications précédentes, **caractérisée en ce que** le contrôleur Flexray (40) est configuré pour synchroniser dans le temps la première interface de bus (31) et la deuxième interface de bus (32), en particulier au cours d'une phase d'accélération du bus.

11. Passerelle Flexray selon l'une quelconque des revendications précédentes, **caractérisée en ce qu'**elle fait partie intégrante d'un outil de test (10) prévu en particulier pour un véhicule à moteur (70), lequel permet de simuler et/ou de manipuler et/ou de vérifier une communication entre le premier et le deuxième bus Flexray.

12. Passerelle Flexray selon la revendication 11, **caractérisée en ce que** l'outil de test (10) présente des moyens de simulation servant à envoyer des données reçues au niveau de la première interface de bus (31), dans un autre message de bus (60, 61), en particulier dans un autre intervalle de temps, à la deuxième interface de bus (32) et/ou inversement.

13. Procédé servant à faire fonctionner une passerelle Flexray (30) comprenant une première interface de bus (31) destinée à être connectée à un premier bus Flexray (80) et comprenant une deuxième interface de bus (32) destinée à être connectée à un deuxième bus Flexray (90), comprenant les étapes qui suivent consistant à :
- coupler une connexion de canal (31a), prévue pour transmettre des messages de bus (60, 61) du premier type de canal (A), de la première interface de bus (31) à une connexion de canal, prévue, de la même manière, pour transmettre des messages de bus (60, 61) du premier type de canal (A), de la deuxième interface de bus (32) et transmettre des messages de bus (60, 61) entre les connexions de canal ;
- envoyer et recevoir des messages de bus (60, 61) d'un premier type de canal (A) d'un bus Flexray (80, 90) au niveau d'une première interface de canal (41) d'un contrôleur Flexray (40), et /ou à émettre et recevoir des messages de bus (60, 61) d'un deuxième type de canal (B) d'un bus Flexray (80, 90) au niveau d'une deuxième interface de canal (42) du contrôleur Flexray (40) ;
- et adapter des messages de bus (60, 61) reçus au niveau de la deuxième interface de bus (32), du premier type de canal (A) en des messages de bus (60, 61) du deuxième type de canal (B) et à les transférer à la deuxième interface de canal (42) du contrôleur Flexray (40) ;
- et/ou adapter des messages de bus (60, 61), envoyés par l'intermédiaire de la deuxième interface de canal (42) du contrôleur Flexray (40), du deuxième type de canal (B) en des messages de bus (60, 61) du premier type de canal (A) et les transférer à la deuxième interface de bus (32) à l'aide d'au moins un module d'adaptation (43, 44).
